(19) **Europäisches Patentamt / European Patent Office / Office européen des brevets**

(11) **EP 1 598 817 B1**

(12) **EUROPEAN PATENT SPECIFICATION**

(45) Date of publication and mention
of the grant of the patent:
**07.01.2009 Bulletin 2009/02**

(51) Int Cl.:
**G11B 7/125** (2006.01) **G11B 7/0045** (2006.01)

(21) Application number: **05010761.4**

(22) Date of filing: **18.05.2005**

(54) **Method and apparatus of determining writing power for a recording medium**

Vorrichtung und Verfahren für die Bestimmung der Schreibleistung für ein Aufzeichnungsmedium

Procédé et appareil de détermination de la puisssance lumineuse d'un faisceau lumineux de balayage destiné à l'écriture d'un support d'enregistrement

(84) Designated Contracting States:
**DE FR GB NL**

(30) Priority: **19.05.2004 KR 2004035714**

(43) Date of publication of application:
**23.11.2005 Bulletin 2005/47**

(73) Proprietor: **Hitachi-LG Data Storage Korea Inc.**
**Seoul 150-010 (KR)**

(72) Inventor: **Kim, Joung Woo**
**Suwon-si**
**Kyunggi-do, 441-390 (KR)**

(74) Representative: **Vossius & Partner**
**Siebertstraße 4**
**81675 München (DE)**

(56) References cited:
**US-A- 6 052 347      US-A1- 2002 001 269**

**Description**

The present invention relates to a method and apparatus of determining writing power for a recording medium such as an optical disk.

The jitter of data reproduced from an optical disk is significantly affected by the writing power used during data recordation. An optical disk has information recorded thereon about a reference writing power setting for the standard rotational speed of the optical disk in order to obtain the best writing quality. A disk reproducing apparatus, therefore, can utilize the recorded information to set the writing power when recording data on the optical disk.

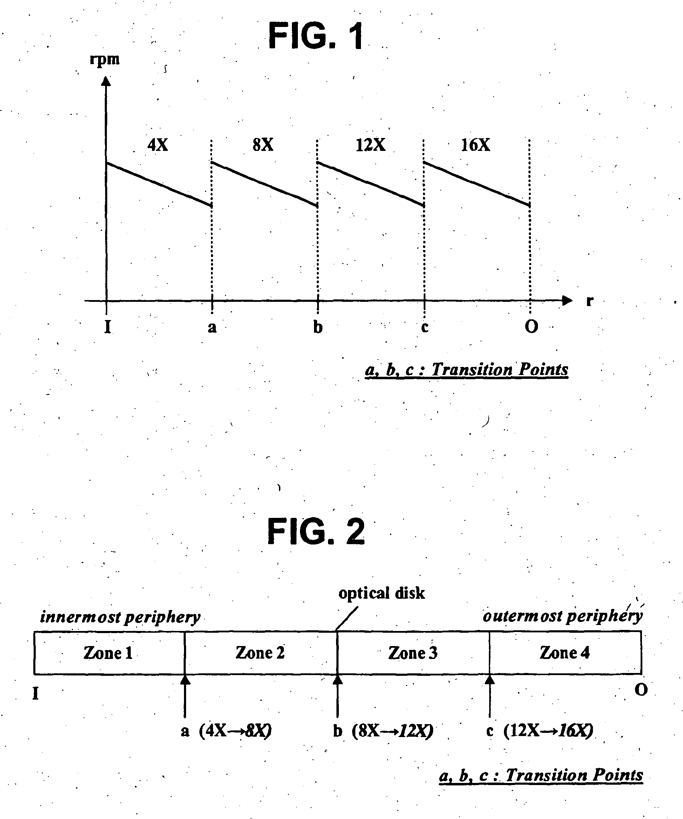

With rapid advances of the recording technology, a related art zone-CLV recording method has emerged as an effective method to increase recording speed. The zone-CLV is a method for data writing in which the writing area within an optical disk is divided into a plurality of zones and data recording is performed at different speeds at different zones. As FIGS. 1 and 2 illustrate, the recording speed in zone I-a is 4X speed and the recording speed in zone a-b is 8X speed. Similarly, the recording speed at zone c-O is maximum 16X speed. The maximum rotational speed in each zone, however, is identical.

Because the recording speed changes within a disk as shown in FIG. 1, it is almost impossible to cope with various recording speeds using only the information about the reference writing power for the standard speed recorded on the optical disk. Further, a writing power considered to be optimal in inner tracks of an optical disk may not be optimal in outer tracks of the optical disk because the characteristics of the optical disk change from inner to outer tracks.

For this reason, optical disk reproducing apparatus store optimal writing power data according to disk manufacturers (or disk codes), disk recording speeds, and zones in nonvolatile memory included therein and utilize the optimal writing power data when recording data. The optimal writing power data stored in the memory is obtained through recording tests.

The method described above, however, has various disadvantages. For example, the method requires increasing nonvolatile memory size as the number of disk types increases, which may result in insufficient memory space. In addition, the optimal writing power data stored in nonvolatile memory does not take account of changes in the optical characteristics of recording apparatuses and variation of disk characteristics. Therefore, the writing power data may cause a significant decrease in writing quality if used inappropriately. Further, the method cannot provide optimal writing quality for disks where the optimal writing power information is not stored in memory.

US-A-6 052 347 describes a method and an apparatus for detecting optimum recording power for an optical disk wherein the optical disk is provided with multiple data recording areas and optimum power control areas encompassing each data recording area.

An object of the invention is to solve at least the above problems and/or disadvantages or to provide at least the advantages described hereinafter.

Another object of the present invention is to provide a method and apparatus of determining writing power at a plurality of recording speeds of an optical disk without using pre-stored writing power data.

Another object of the present invention is to provide a method and apparatus of determining writing power by detecting a linear coefficient for writing power according to a first recording position at a first recording speed and performing power calibration (PC) only once per recording speed to reduce the time required to run the PC.

To achieve at least the above objects or advantages in a whole or in part and in accordance with the purpose of the invention, as embodied and broadly described herein there is provided a method according to claim 1.

To further achieve at least the above objects or advantages in a whole or in part and in accordance with the purpose of the invention, as embodied and broadly described herein there is provided an apparatus according to claim 12.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements wherein:

FIGS. 1 and 2 illustrate an example of a related art zone-CLV recording method and divided zones on an optical disk according to the method;

FIG. 3 illustrates a block diagram of a preferred embodiment of an optical disk apparatus embodying the present invention;

FIG. 4 illustrates a flow diagram of a preferred embodiment of determining writing power according to the present invention;

FIG. 5a illustrates an exemplary graph for determining a linear coefficient at the standard recording speed;

FIG. 5b illustrates exemplary data stored in memory for obtaining optimal writing power; and

FIG. 6 illustrates relation between optimal writing power at a certain area for a recording speed and pre-stored optimal writing power data according to a preferred embodiment of the present invention.

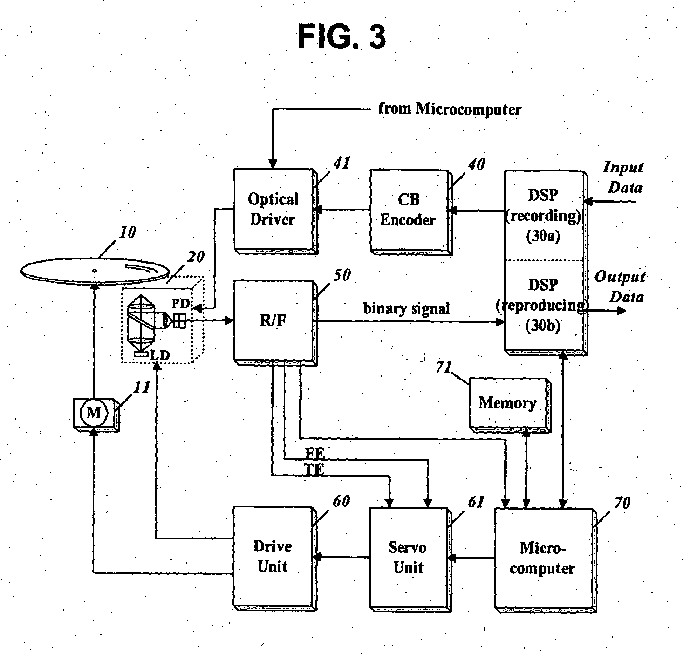

FIG. 3 illustrates a block diagram of an embodiment of an optical disk apparatus according the present invention. The apparatus can include a digital signal processor for recording 30a for converting input digital data into a recording format by adding ECC, etc, a channel bit encoder 40 for converting the data in the recording format into a bit stream, an optical driver 41 for providing electrical current according to the bit stream, and an optical pickup 20 for recording the bit stream on an optical disk 10 and detecting signals recorded on the optical disk 10 by irradiating light such as a laser beam onto the optical disk 10. The apparatus can further include an R/F unit 50 for generating a binary signal from the signal detected by the optical pickup 20 and generating focus/tracking error signals, a drive unit 60 for driving the optical pickup 20 and a spindle motor 11, and a servo unit 61 for controlling the drive unit 60 based on the focus/tracking error signals and the rotational speed of the optical disk 10. The apparatus can further include a digital signal processor for reproduction 30b for retrieving original digital data from the binary signal using a clock synchronized with the binary data, a memory 71 for storing data, and a microcomputer 70 for supervising overall operations of the apparatus, performing OPC (optimal power calibration) operation on the optical disk 10, and calculating optimal writing power setting for each recording speed of the optical disk 10. However, the present invention is not intended to be so limited because the OPC operations can be conducted by an additional elements, microcomputers or in combination with existing elements.

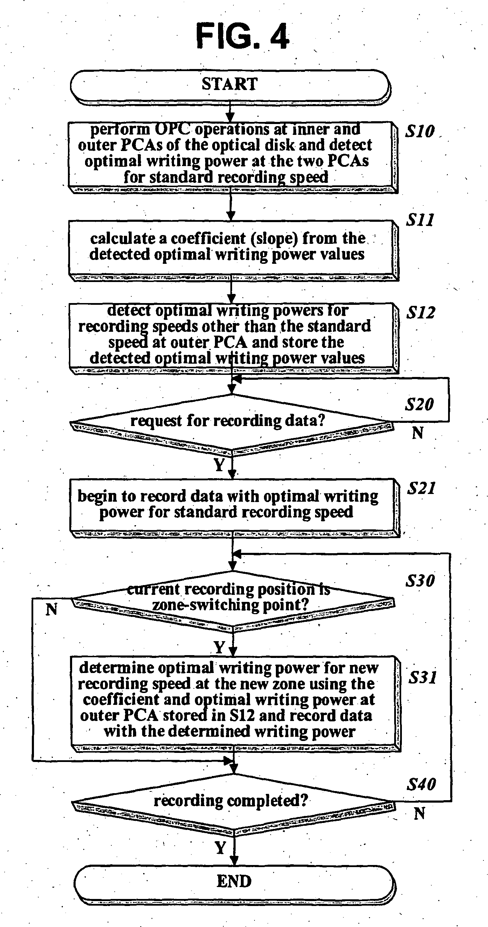

FIG. 4 illustrates a flow diagram of an embodiment of a method for determining writing power (e.g., OPC) according to the present invention. The method will now be described using and can be applied to the apparatus shown in FIG. 3. However, the present invention is not intended to be so limited.

DVD-R and DVD-RW disks can have PCAs (power calibration areas) reserved for performing laser power tests before actually writing data. PCAs can be, for example, both in the outer disk and in the inner disk to take account of differences of the disk characteristics at inner and outer tracks.

The method of determining optimal writing power according to FIG. 4 can perform OPC (optimal power calibration) operations at both of the PCAs placed in inner and outer tracks of the optical disk 10. The method of FIG. 4 can determine the optimal writing power at each recording speed based on the OPC result.

As shown in FIG. 4, if the optical disk 10 is loaded, the microcomputer 70 can move the optical pickup 20 to the inner part of the optical disk 10 where one PCA is located and perform OPC with the lowest recording speed (e.g., 4X speed) to obtain optimal writing power (Pop(4X)) at the recording speed.

First, the OPC operation can detect a reference optimum writing power (Pind) for the reference recording speed of the optical disk 10. The reference optimum writing power and reference recording speed data can be encoded in the pre-groove of the optical disk 10. We assume here that the reference optimum writing power is associated with 4X recording speed. However, the present invention is not intended to be so limited.

The microcomputer 70 can instruct the optical driver 41 to record predefined test data at the PCA with several different writing powers by slightly changing the writing power from the reference optimum writing power. For example, 15 data frames are recorded with 15 respective writing powers in one OPC process.

If recording of the test data is finished, the microcomputer 70 can control the optical pickup 20 to read the test data back at the PCA to judge the optimal writing power. The microcomputer 70 can search for the writing power yielding the highest jitter quality (Pin(4X)) and store the writing power and the address of the PCA showing the highest writing quality in the memory 71. The address can be obtained, for example, from information encoded in the wobble track or header information located at each boundary at which a land/groove switch occurs.

If the OPC operation is completed at the inner PCA, the microcomputer 70 can instruct the servo unit 61 to move the optical pickup 20 to the PCA placed at the outer area of the optical disk 10 and repeat the OPC operation to obtain the optimal writing power (Pout(4X)) at the outer PCA (block S10). The microcomputer 70 then can store the detected optimal writing power (Pout(4X)) and the address of the PCA showing the highest writing quality in the memory 71.

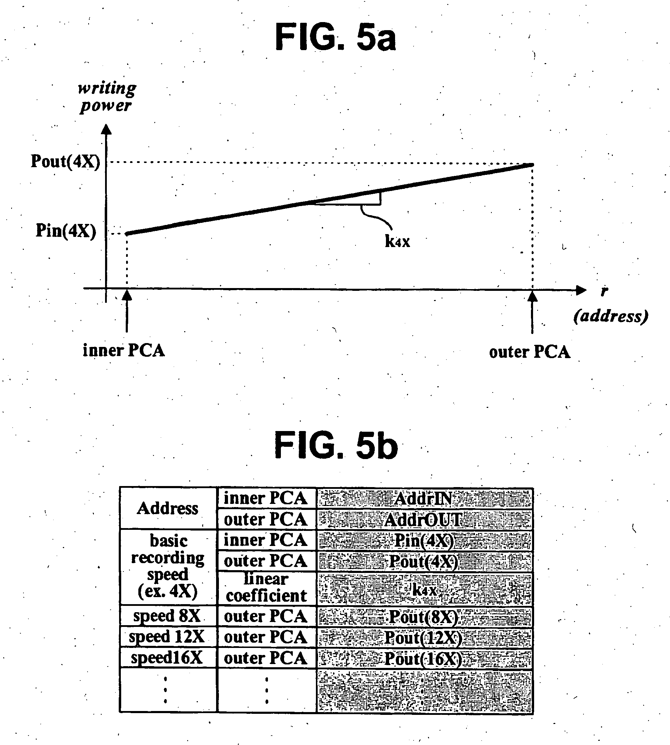

The microcomputer 70 can construct a linear graph as shown in FIG. 5a using the detected two optimal writing power settings (Pin(4X) and Pout(4X)) and calculate the slope of the line $k_{4x}$ connecting the two points (block S11). However, the present invention is not intended to be so limited as other calculatable approximations can be used according to characteristics of the disk to connect the detected writing power settings. The slope $k_{4x}$ indicates the variation of optimal writing power according to recording position at 4X recording speed. If there is no variation, the slope should be 0.

The microcomputer 70 can detect the optimal writing power settings for other recording speeds (e.g., 8X, 12X, 16X, etc) at the outer PCA in the same manner. The detected optimal writing powers (e.g., Pout (8X), Pout(12X), Pout (16X), etc) in the memory 71 can then be stored as shown in FIG. 5b (block S12).

If a request for recording data is received (block S20), the microcomputer 70 can calculate optimal writing power at the target position before recording data or changing recording speed. The process for obtaining the optimal writing power will be described with respect to the zone-CLV writing method as shown in FIG. 1. However, the present invention is not intended to be so limited.

If the starting position to record data is within zone 1 (e.g., interval I-a) shown in FIG. 1, the microcomputer 70 can record input data at a designated recording speed for zone 1 (e.g., 4X speed) with the detected optimal writing power (Pin(4X)) (block S21). During the recording operation, the microcomputer 70 can keep detecting the current recording position to determine whether a switch to a higher recording speed should be done at the current position (block S30).

If the zone boundary (e.g., a in FIG. 1) is reached during the recording of data, the microcomputer 70 can switch from the current 4X speed to 8X speed, which is the designated recording speed for zone 2 (e.g., interval a-b in FIG. 1) by controlling the drive unit 60, determine optimal writing power for zone 2, and continue recording of data with the determined optimal writing power (block S31). The method to determine the optimal writing power for zone 2 can be as follows

The microcomputer 70 first checks the designated recording speed for zone 2, (e.g., 8X speed) and reads the optimal writing power for 8X speed detected at the outer PCA (Pout(8X)), the slope (e.g., $k_{4X}$) obtained from the values of Pin(4X) and Pout(4X), and the addresses of the inner and outer PCAs (AddrIn and AddrOUT) where the OPC was performed from the memory 71. The optimal writing power (P(nX)) can be calculated from the following equation

$$P(nX) = Pout(nX) - k_{4x} \times (r2(AddrOUT) - r(AddrCUR)) \quad (1)$$

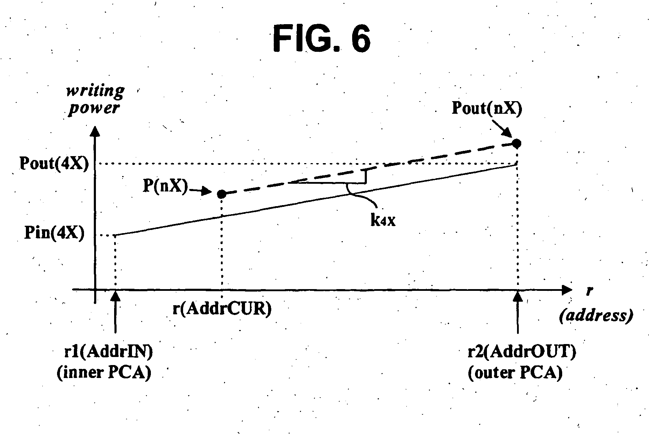

where r2(AddrOUT)and r(AddrCUR) are the radius of the outer PCA and the radius of the current track on the optical disk 10, respectively. The method of calculating the radius of a track on a disk from the address thereof is well known. FIG. 6 illustrates an exemplary relation between the optimal writing power (P(nX)) calculated by equation (1) and optimal writing powers at inner and outer PCAs at the reference recording speed according to the embodiment shown in FIG. 4.

If Pout(nX) in equation (1) is replaced by Pout(8X), which is the optimal writing power for 8X speed obtained at the outer PCA, the optimal writing power at the current position for 8X speed P(8X) can be obtained. Likewise, if Pout (4X) is used in equation (1), the optimal writing power at the current position for 4X speed P(4X) can be obtained. Further, although the designated recording speed for zone 2 is 8X speed, Pout(4X) may be used at zone 2 when 4X-speed writing is requested or sufficiently high writing quality is not obtained with 8X speed.

If a next zone boundary (e.g., b or c in FIG. 1) is reached during recording of data at zone 2 with optimal writing power calculated by equation (1), the microcomputer 70 can read Pout(nX), the optimal writing power for the designated recording speed at the new zone, from the memory 71 and calculate optimal writing power for the new zone using equation (1). The microcomputer 70 can then record data on the optical disk 10 after adjusting the output of the optical driver 41 according to the calculated writing power.

In the preferred embodiment described above, the OPC operation can be performed at the inner and outer PCAs based on the reference writing power (Pind) recorded on the optical disk to obtain optimal writing power at respective PCAs (Pin and Pout) and a prescribed coefficient, (e.g., the linear coefficient) ($k_{nX}$), that is the slope of a line connecting Pin an Pout, is derived from Pin and Pout to calculate optimal writing power for different recording speeds. In one embodiment, a time required to run the OPC can be decreased by performing the OPC operation only at the outer PCA and calculating the linear coefficient using the optimal writing power obtained at the outer PCA (Pout) and the reference writing power (Pind) recorded on the optical disk.

Embodiments according to the present invention can be applied to a partial CAV recording method as well as the zone-CLV recording method. However, the present invention is not intended to be so limited.

The partial CAV recording method records data at increasing linear velocity from inner to outer tracks until a limit speed is reached and then recording of data is performed at a fixed speed (e.g., constant linear velocity, CLV). In the partial CAV recording method, the optimal writing power at each position at the CAV recording area can be calculated in the same manner as described above.

In addition, if the area at which data is recorded changes though the recording speed does not change, the optimal writing power at the recording position can be calculated using equation (1).

Although described as optimal power calibration (OPC) and OPC operations in this specification, the present invention is not intended to be so limited thereby. Embodiments using or describing OPC and OPC operations are intended to provide an improved power writing operations and/or levels relative to the related art, not "optimal" as generally defined.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

As described above, embodiments of methods and apparatus for writing power for a recording medium have various advantages. For example, an embodiment of a method of determining writing power for an optical disk according to the present invention allows good writing quality by providing writing power that takes account of changes of disk characteristics and/or variation of optical characteristics of the apparatus. Further, embodiments allow stable reproduction of recorded data. Also, embodiments according to the present invention allows nonvolatile memory to be used for purposes other than storing writing power data.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

**Claims**

1. A method comprising:

   (a) obtaining a linear coefficient of writing power for a recording medium (10) in relation to first and second recording areas different from each other at a first recording speed;
   (b) detecting a writing power at said first recording area of the recording medium for a second recording speed other than the first speed; and
   (c) determining a writing power at a recording area other than the first area for the second speed using the obtained linear coefficient and the detected writing power for the second speed.

2. The method of claim 1, wherein the area other than the first area for the second speed is one among a plurality of zones according to a zone-CLV.

3. The method of claim 2, wherein the area other than the first area for the second speed is a corresponding zone among a plurality of zones.

4. The method of claim 1, 2, or 3, wherein the obtaining detects the linear coefficient of writing power using determined writing power values obtained by OPC (Optimal Power Calibration) operations performed at inner and outer areas of the recording medium (10) with the first recording speed.

5. The method of claim 1, 2, or 3, wherein the obtaining detects the linear coefficient using a reference writing power at the first recording speed recorded on the recording medium and a calculated writing power obtained by an OPC operation performed at a calculation area of the recording medium (10).

6. The method of claim 5, wherein the calculation area of the recording medium (10) at which the OPC operation is performed is a power calibration area (PCA) reserved at an outer part of the recording medium (10).

7. The method of any of claims 1 to 6, wherein the first area is a power calibration area (PCA) reserved at the outer part of the recording medium (10).

8. The method of any of claims 1 to 7, wherein the detecting the writing power at the first area comprises:

   recording test data on the recording medium (10) with a plurality of writing power settings with the second recording speed; and
   reading the recorded test data back to detect the writing power for the second speed based on the quality of signals reproduced from the recording medium (10).

9. The method of any of claims 1 to 8, wherein the determining determines the writing power for the second recording speed by the equation "(the writing power for the second recording speed) - (the linear coefficient) $\times$ (the distance between the current recording area other than the first area and the first area)".

10. The method of any of claims 1 to 9, wherein the determining is performed each time the recording speed of the recording medium (10) changes or each time the recording area of the recording medium (10) changes at predetermined intervals.

11. The method of any of claims 1 to 10, wherein the first recording speed is the lowest speed among several recording speeds with which data recording is performed on the recording medium (10).

12. An apparatus, comprising:

an optical pickup (20) configured to record signals on the recording medium (10) and read the recorded signals from the recording medium (10);
an optical driver (41) configured to provide the optical pickup (20) with electrical current that determiners the strength of the recorded signals according to a control signal;
a drive unit (60) configured to rotate the recording medium (10); and
a controller (70) configured to detect a linear coefficient of writing power for the recording medium (10) in relation to first and second recording areas different from each other while rotating the recording medium (10) at a first recording speed using the drive unit (60) detect a first writing power at said first recording area of the recording medium (10) while rotating the recording medium (10) at a second recording speed different from the first recording speed using the drive unit (60), determine a second writing power at said second recording area other than the first area for the second recording speed using the detected linear coefficient and the detected first writing power for the second recording speed, and output the control signal so that electrical current corresponding to the determined second writing power is provided to the optical pickup (20).

13. The apparatus of claim 12, wherein the controller (70) detects the linear coefficient using writing power values obtained by OPC operations performed at inner and outer areas of the recording medium (10) with the first recording speed.

14. The apparatus of claim 12, wherein the controller (70) detects the linear coefficient using a reference writing power at the first recording speed recorded on the recording medium (10) and a writing power obtained by an OPC operation performed at an area of the recording medium (10).

15. The apparatus of claim 14, wherein the area of the recording medium (10) at which the OPC operation is performed is a power calibration area (PCA) reserved at the outer part of the recording medium (10).

16. The apparatus of any of claims 12 to 15, wherein the first area is a power calibration area (PCA) reserved at the outer part of the recording medium (10), and wherein the first recording speed is the lowest speed among several recording speeds with which data recording is performed on the rewording medium (10).

17. The apparatus of any of claims 12 to 16, wherein the controller (70) determines the optimal writing power for the second recording speed by the equation "(the first writing power for the second recording speed) - (the linear coefficient) $\times$ (the distance between the second recording area other than the first area and the first area).

18. The apparatus of any of claims 12 to 16, wherein the controller (70) detects a third writing power at a third area of the recording medium (10) while rotating the recording medium at a third recording speed different from the first and second recording speeds using the drive unit (60), determines a fourth writing power at a fourth recording area other than the third area for the third recording speed using the detected linear coefficient and the detected third writing power for the third recording speed, and wherein the second recording area for the second speed and the fourth recording area for the third speed are in corresponding ones of a plurality of zones according to a zone-CLV.

**Patentansprüche**

1. Verfahren, das aufweist:

(a) Ermitteln eines linearen Koeffizienten der Schreibleistung für ein Aufzeichnungsmedium (10) in Bezug auf unterschiedliche erste und zweite Aufzeichnungsbereiche bei einer ersten Aufzeichnungsgeschwindigkeit;
(b) Erfassen einer Schreibleistung in dem ersten Aufzeichnungsbereich des Aufzeichnungsmediums für eine von der ersten Aufzeichnungsgeschwindigkeit verschiedene zweite Aufzeichnungsgeschwindigkeit; und
(c) Bestimmen einer Schreibleistung in einem anderen Aufzeichnungsbereich als dem ersten Bereich für die zweite Geschwindigkeit unter Verwendung des ermittelten linearen Koeffizienten und der erfaßten Schreibleistung für die zweite Geschwindigkeit.

2. Verfahren nach Anspruch 1, wobei der andere als der erste Bereich für die zweite Geschwindigkeit eine von mehreren Zonen gemäß einem Zonen-CLV-Verfahren ist.

3. Verfahren nach Anspruch 2, wobei der andere als der erste Bereich für die zweite Geschwindigkeit eine entsprechende Zone von mehreren Zonen ist.

4. Verfahren nach Anspruch 1, 2 oder 3, wobei die Ermittlung den linearen Schreibleistungskoeffizienten unter Verwendung von bestimmten Schreibleistungswerten erfaßt, die durch OPC-Operationen (Optimal Power Calibration) ermittelt werden, die an inneren und äußeren Bereichen des Aufzeichnungsmediums (10) mit der ersten Aufzeichnungsgeschwindigkeit durchgeführt werden.

5. Verfahren nach Anspruch 1, 2 oder 3, wobei die Ermittlung den linearen Koeffizienten unter Verwendung einer auf dem Aufzeichnungsmedium aufgezeichneten Bezugsschreibleistung bei der ersten Aufzeichnungsgeschwindigkeit und einer berechneten Schreibleistung erfaßt, die durch eine OPC-Operation ermittelt wird, die an einem Berechnungsbereich des Aufzeichnungsmediums (10) ausgeführt wird.

6. Verfahren nach Anspruch 5, wobei der Berechnungsbereich des Aufzeichnungsmediums (10), an dem die OPC-Operation ausgeführt wird, ein an einem äußeren Teil des Aufzeichnungsmediums (10) reservierter Leistungskalibrierbereich (PCA) ist.

7. Verfahren nach einem der Ansprüche 1 bis 6, wobei der erste Bereich ein an dem äußeren Teil des Aufzeichnungsmediums (10) reservierter Leistungskalibrierbereich (PCA) ist.

8. Verfahren nach einem der Ansprüche 1 bis 7, wobei die Erfassung der Schreibleistung in dem ersten Bereich aufweist:

   Aufzeichnen von Testdaten auf das Aufzeichnungsmedium (10) mit mehreren Schreibleistungseinstellungen mit der zweiten Aufzeichnungsgeschwindigkeit; und
   Wiedereinlesen der aufgezeichneten Testdaten, um die Schreibleistung für die zweite Geschwindigkeit auf der Basis der Qualität der von dem Aufzeichnungsmedium (10) reproduzierten Signale zu erfassen.

9. Verfahren nach einem der Ansprüche 1 bis 8, wobei die Bestimmung die Schreibleistung für die zweite Aufzeichnungsgeschwindigkeit nach der Gleichung
   "(Schreibleistung für die zweite Aufzeichnungsgeschwindigkeit) - (linearer Koeffizient) $\times$ (Abstand zwischen dem vom ersten Bereich verschiedenen aktuellen Aufzeichnungsbereich und dem ersten Bereich)"
   festlegt.

10. Verfahren nach einem der Ansprüche 1 bis 9, wobei die Bestimmung bei jeder Änderung der Aufzeichnungsgeschwindigkeit des Aufzeichnungsmediums (10) oder jedesmal dann durchgeführt wird, wenn sich der Aufzeichnungsbereich des Aufzeichnungsmediums (10) in vorgegebenen Intervallen ändert.

11. Verfahren nach einem der Ansprüche 1 bis 10, wobei die erste Aufzeichnungsgeschwindigkeit die niedrigste Geschwindigkeit unter mehreren Aufzeichnungsgeschwindigkeiten ist, mit denen eine Datenaufzeichnung auf das Aufzeichnungsmedium (10) durchgeführt wird.

12. Vorrichtung, die aufweist:

   einen optischen Abtaster (20), der so konfiguriert ist, daß er Signale auf das Aufzeichnungsmedium (10) aufzeichnet und die aufgezeichneten Signale von dem Aufzeichnungsmedium (10) liest;
   einen optischen Treiber (41), der so konfiguriert ist, daß er den optischen Abtaster (20) mit elektrischem Strom versorgt, der die Stärke der aufgezeichneten Signale entsprechend einem Steuersignal festlegt;
   eine Antriebseinheit (60), die so konfiguriert ist, daß das Aufzeichnungsmedium (10) in Drehung versetzt; und
   eine Steuereinheit (70), die so konfiguriert ist, daß sie einen linearen Koeffizienten der Schreibleistung für das Aufzeichnungsmedium (10) in Bezug auf unterschiedliche erste und zweite Aufzeichnungsbereiche erfaßt, während das Aufzeichnungsmedium (10) unter Verwendung der Antriebseinheit (60) mit einer ersten Aufzeichnungsgeschwindigkeit gedreht wird; eine erste Schreibleistung in dem ersten Aufzeichnungsbereich des Aufzeichnungsmediums (10) erfaßt, während das Aufzeichnungsmedium (10) unter Verwendung der Antriebseinheit (60) mit einer zweiten Aufzeichnungsgeschwindigkeit gedreht wird, die sich von der ersten Aufzeichnungsgeschwindigkeit unterscheidet; unter Verwendung des erfaßten linearen Koeffizienten und der erfaßten ersten Schreibleistung für die zweite Aufzeichnungsgeschwindigkeit eine zweite Schreibleistung in dem von dem ersten Aufzeichnungsbereich verschiedenen zweiten Aufzeichnungsbereich ermittelt und das Steuersignal so ausgibt, daß der elektrische Strom, welcher der ermittelten zweiten Schreibleistung entspricht, dem optischen Abtaster (20) zugeführt wird.

13. Vorrichtung nach Anspruch 12, wobei die Steuereinheit (70) den linearen Koeffizienten unter Verwendung von Schreibleistungswerten erfaßt, die durch OPC-Operationen ermittelt werden, die an inneren und äußeren Bereichen des Aufzeichnungsmediums (10) mit der ersten Aufzeichnungsgeschwindigkeit ausgeführt werden.

14. Vorrichtung nach Anspruch 12, wobei die Steuereinheit (70) den linearen Koeffizienten unter Verwendung einer auf das Aufzeichnungsmedium (10) aufgezeichneten Bezugsschreibleistung bei der ersten Aufzeichnungsgeschwindigkeit und einer Schreibleistung erfaßt, die durch eine in einem Bereich des Aufzeichnungsmediums (10) ausgeführte OPC-Operation ermittelt wird.

15. Vorrichtung nach Anspruch 14, wobei der Bereich des Aufzeichnungsmediums (10), in dem die OPC-Operation ausgeführt wird, ein am äußeren Teil des Aufzeichnungsmediums (10) reservierter Leistungskalibrierbereich (PCA) ist.

16. Vorrichtung nach einem der Ansprüche 12 bis 15, wobei der erste Bereich ein am äußeren Teil des Aufzeichnungsmediums (10) reservierter Leistungskalibrierbereich (PCA) ist, und wobei die erste Aufzeichnungsgeschwindigkeit die niedrigste Geschwindigkeit unter mehreren Aufzeichnungsgeschwindigkeiten, mit denen eine Datenaufzeichnung auf das Aufzeichnungsmedium (10) durchgeführt wird.

17. Vorrichtung nach einem der Ansprüche 12 bis 16, wobei die Steuereinheit (70) die optimale Schreibleistung für die zweite Aufzeichnungsgeschwindigkeit nach der Gleichung
"(erste Schreibleistung für die zweite Aufzeichnungsgeschwindigkeit) - (linearer Koeffizient) $\times$ (Abstand zwischen dem vom ersten Bereich verschiedenen zweiten Aufzeichnungsbereich und dem ersten Bereich)"
festlegt.

18. Vorrichtung nach einem der Ansprüche 12 bis 16, wobei die Steuereinheit (70) eine dritte Schreibleistung in einem dritten Bereich des Aufzeichnungsmediums (10) erfaßt, während das Aufzeichnungsmedium unter Verwendung der Antriebseinheit (60) mit einer dritten, von den ersten und zweiten Aufzeichnungsgeschwindigkeiten verschiedenen Aufzeichnungsgeschwindigkeit gedreht wird, eine vierte Schreibleistung in einem von dem dritten Bereich verschiedenen vierten Aufzeichnungsbereich für die dritte Aufzeichnungsgeschwindigkeit unter Verwendung des erfaßten linearen Koeffizienten und der erfaßten dritten Schreibleistung für die dritte Aufzeichnungsgeschwindigkeit bestimmt, und wobei der zweite Aufzeichnungsbereich für die zweite Geschwindigkeit und der vierte Aufzeichnungsbereich für die dritte Geschwindigkeit in entsprechenden Zonen von mehreren Zonen gemäß einem Zonen-CLV-Verfahren liegen.

**Revendications**

1. Procédé comportant les étapes :

   (a) obtenir un coefficient linéaire de puissance d'écriture pour un support d'enregistrement (10) en relation avec des première et deuxième zones d'enregistrement différentes l'une de l'autre à une première vitesse d'enregistrement ;
   (b) détecter une puissance d'écriture au niveau de ladite première zone d'enregistrement du support d'enregistrement pour une deuxième vitesse d'enregistrement autre que la première vitesse ; et
   (c) déterminer une puissance d'écriture au niveau d'une zone d'enregistrement autre que la première zone pour la deuxième vitesse en utilisant le coefficient linéaire obtenu et la puissance d'écriture détectée pour la deuxième vitesse.

2. Procédé selon la revendication 1, dans lequel la zone autre que la première zone pour la deuxième vitesse est l'une parmi une pluralité de zones conformes à une zone CLV.

**3.** Procédé selon la revendication 2, dans lequel la zone autre que la première zone pour la deuxième vitesse est une zone correspondante parmi une pluralité de zones.

**4.** Procédé selon la revendication, 1, 2, ou 3, dans lequel l'obtention permet de détecter le coefficient linéaire de puissance d'écriture en utilisant des valeurs de puissance d'écriture déterminées obtenues grâce à des opérations d'OPC (étalonnage de puissance optimale) exécutées au niveau de zones internes et externes du support d'enregistrement (10) avec la première vitesse d'enregistrement.

**5.** Procédé selon la revendication 1, 2 ou 3, dans lequel l'obtention permet de détecter le coefficient linéaire en utilisant une puissance d'écriture de référence à la première vitesse d'enregistrement enregistrée sur le support d'enregistrement et une puissance d'écriture calculée obtenue grâce à une opération d'OPC exécutée au niveau d'une zone de calcul du support d'enregistrement (10).

**6.** Procédé selon la revendication 5, dans lequel la zone de calcul du support d'enregistrement (10) au niveau de laquelle l'opération d'OPC est exécutée est une zone d'étalonnage de puissance (PCA) réservée à une partie externe du support d'enregistrement (10).

**7.** Procédé selon l'une quelconque des revendications 1 à 6, dans lequel la première zone est une zone d'étalonnage de puissance (PCA) réservée au niveau de la partie externe du support d'enregistrement (10).

**8.** Procédé selon l'une quelconque des revendications 1 à 7, dans lequel la détection de la puissance d'écriture au niveau de la première zone comportant les étapes :

enregistrer des données d'essai sur le support d'enregistrement (10) avec une pluralité de réglages de puissance d'écriture avec la deuxième vitesse d'enregistrement ; et
relire les données d'essai enregistrées pour détecter la puissance d'écriture pour la deuxième vitesse en se basant sur la qualité des signaux reproduits à partir du support d'enregistrement (10).

**9.** Procédé selon l'une quelconque des revendications 1 à 8, dans lequel la détermination permet de déterminer la puissance d'écriture pour la deuxième vitesse d'enregistrement grâce à l'équation "(puissance d'écriture pour la deuxième vitesse d'enregistrement) - (coefficient linéaire) x (distance entre la zone d'enregistrement actuelle autre que la première zone et la première zone)".

**10.** Procédé selon l'une quelconque des revendications 1 à 9, dans lequel la détermination est exécutée chaque fois que la vitesse d'enregistrement du support d'enregistrement (10) change ou chaque fois que la zone d'enregistrement du support d'enregistrement (10) change à intervalles prédéterminés.

**11.** Procédé selon l'une quelconque des revendications 1 à 10, dans lequel la première vitesse d'enregistrement est la vitesse la plus basse parmi plusieurs vitesses d'enregistrement avec laquelle l'enregistrement des données est exécuté sur le support d'enregistrement (10).

**12.** Appareil comprenant :

un capteur optique (20) configuré pour enregistrer des signaux sur le support d'enregistrement (10) et lire les signaux enregistrés à partir du support d'enregistrement (10) ;
un amplificateur optique (41) configuré pour fournir au capteur optique (20) un courant électrique qui détermine la force des signaux enregistrés en fonction d'un signal de commande ;
une unité de commande (60) configurée pour faire tourner le support d'enregistrement (10) ; et
un contrôleur (70) configuré pour détecter un coefficient linéaire de puissance d'écriture pour le support d'enregistrement (10) en relation avec des première et deuxième zones d'enregistrement différentes l'une de l'autre tout en faisant tourner le support d'enregistrement (10) à une première vitesse d'enregistrement en utilisant l'unité de commande (60) ; pour détecter une première puissance d'écriture au niveau de ladite première zone d'enregistrement du support d'enregistrement (10) tout en faisant tourner le support d'enregistrement (10) à une deuxième vitesse d'enregistrement différente de la première vitesse d'enregistrement en utilisant l'unité de commande (60), pour déterminer une deuxième puissance d'écriture au niveau de ladite deuxième zone d'enregistrement autre que la première zone pour la deuxième vitesse d'enregistrement en utilisant le coefficient linéaire détecté et la première puissance d'écriture détectée pour la deuxième vitesse d'enregistrement, et produire en sortie le signal de commande de telle sorte que le courant électrique correspondant à la deuxième puissance d'écriture déterminée est fourni au capteur optique (20).

**13.** Appareil selon la revendication 12, dans lequel le contrôleur (70) détecte le coefficient linéaire en utilisant les valeurs de puissance d'écriture obtenues grâce à des opérations d'OPC exécutées au niveau de zones internes et externes du support d'enregistrement (10) avec la première vitesse d'enregistrement.

**14.** Appareil selon la revendication 12, dans lequel le contrôleur (70) détecte le coefficient linéaire en utilisant une puissance d'écriture de référence à la première vitesse d'enregistrement enregistrée sur le support d'enregistrement (10) et une puissance d'écriture obtenue grâce à une opération d'OPC exécutée au niveau d'une zone du support d'enregistrement (10).

**15.** Appareil selon la revendication 14, dans lequel la zone du support d'enregistrement (10) au niveau de laquelle l'opération d'OPC est exécutée est une zone d'étalonnage de puissance (PCA) réservée à la partie externe du support d'enregistrement (10).

**16.** Appareil selon l'une quelconque des revendications 12 à 15, dans lequel la première zone est une zone d'étalonnage de puissance (PCA) réservée au niveau de la partie externe du support d'enregistrement (10), et dans lequel la première vitesse d'enregistrement est la vitesse la plus basse parmi plusieurs vitesses d'enregistrement avec lesquelles l'enregistrement des données est exécuté sur le support d'enregistrement (10).

**17.** Appareil selon l'une quelconque des revendications 12 à 16, dans lequel le contrôleur (70) détermine la puissance d'écriture optimale pour la deuxième vitesse d'enregistrement grâce à l'équation "(première puissance d'écriture pour la deuxième vitesse d'enregistrement) - (coefficient linéaire) x (distance entre la deuxième zone d'enregistrement autre que la première zone et la première zone)".

**18.** Appareil selon l'une quelconque des revendications 12 à 16, dans lequel le contrôleur (70) détecte une troisième puissance d'écriture au niveau d'une troisième zone du support d'enregistrement (10) tout en faisant tourner le support d'enregistrement à une troisième vitesse d'enregistrement différente des première et deuxième vitesses d'enregistrement en utilisant l'unité de commande (60), détermine une quatrième puissance d'écriture au niveau d'une quatrième zone d'enregistrement autre que la troisième zone pour la troisième vitesse d'enregistrement en utilisant le coefficient linéaire détecté et la troisième puissance d'écriture détectée pour la troisième vitesse d'enregistrement, et dans lequel la deuxième zone d'enregistrement pour la deuxième vitesse et la quatrième zone d'enregistrement pour la troisième vitesse sont dans les zones correspondantes d'une pluralité de zones conformes à une zone CLV.

# FIG. 1

*a, b, c : Transition Points*

# FIG. 2

*a, b, c : Transition Points*

# FIG. 3

from Microcomputer

Input
Data

Optical
Driver *41*

CB
Encoder *40*

DSP
(recording)
(30a)

*10*

*20*

PD

R/F *50*

binary signal

DSP
(reproducing)
(30b)

Output
Data

LD

Memory *71*

M *11*

FE
TE

Drive
Unit *60*

Servo
Unit *61*

Micro-
computer *70*

# FIG. 4

```
                    ┌─────────────────────┐
                    │        START        │
                    └─────────────────────┘
                               │
                               ▼
        ┌───────────────────────────────────────┐
        │   perform OPC operations at inner and  │  S10
        │ outer PCAs of the optical disk and detect│
        │   optimal writing power at the two PCAs │
        │        for standard recording speed     │
        └───────────────────────────────────────┘
                               │
                               ▼
        ┌───────────────────────────────────────┐
        │   calculate a coefficient (slope) from the │  S11
        │   detected optimal writing power values │
        └───────────────────────────────────────┘
                               │
                               ▼
        ┌───────────────────────────────────────┐
        │      detect optimal writing powers for │  S12
        │ recording speeds other than the standard │
        │         speed at outer PCA and store the │
        │   detected optimal writing power values │
        └───────────────────────────────────────┘
                               │
                               ▼
              ◇ request for recording data? ◇──── N    S20
                               │ Y
                               ▼
        ┌───────────────────────────────────────┐
        │  begin to record data with optimal writing │  S21
        │      power for standard recording speed │
        └───────────────────────────────────────┘
                               │
                               ▼
    N ──── ◇ current recording position is        ◇   S30
                  zone-switching point?
                               │ Y
                               ▼
        ┌───────────────────────────────────────┐
        │  determine optimal writing power for new │  S31
        │ recording speed at the new zone using the │
        │   coefficient and optimal writing power at │
        │  outer PCA stored in S12 and record data │
        │     with the determined writing power   │
        └───────────────────────────────────────┘
                               │
                               ▼
              ◇   recording completed?   ◇──── N    S40
                               │ Y
                               ▼
                    ┌─────────────────────┐
                    │         END         │
                    └─────────────────────┘
```

# FIG. 5a

*writing power*

Pout(4X)

Pin(4X)

$k_{4X}$

*r (address)*

inner PCA

outer PCA

# FIG. 5b

| Address | inner PCA | AddrIN |
| --- | --- | --- |
| | outer PCA | AddrOUT |
| basic recording speed (ex. 4X) | inner PCA | Pin(4X) |
| | outer PCA | Pout(4X) |
| | linear coefficient | $k_{4X}$ |
| speed 8X | outer PCA | Pout(8X) |
| speed 12X | outer PCA | Pout(12X) |
| speed16X | outer PCA | Pout(16X) |
| ⋮ | ⋮ | |

# FIG. 6

writing power

Pout(nX)

Pout(4X)

P(nX)→

k₄ₓ

Pin(4X)

r(AddrCUR)

r (address)

r1(AddrIN)
(inner PCA)

r2(AddrOUT)
(outer PCA)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6052347 A